# EUROPEAN PATENT APPLICATION

(11) **EP 1 852 171 A1**
(43) Date of publication of application: **07.11.2007**
(21) Application number: 06712319.0
(22) Date of filing: 25.01.2006
(51) Int. Cl.: B01D 46/04, C01B 31/02

(54) **GAS FILTRATION APPARATUS**

(30) Priority: 23.02.2005 JP 2005047260; 30.08.2005 JP 2005249988
(71) Applicant: Bussan Nanotech Research Institute Inc., Tokyo 100-0004 (JP)
(72) Inventor: TAKAHASHI, Kojuro, htemachi 1-chome, Chiyoda-ku, Tokyo, 100 (JP); MUNEKANE, Fuminori, htemachi 1-chome, Chiyoda-ku, Tokyo, 100 (JP); KAWAGUCHI, Hirosuke, htemachi 1-chome, Chiyoda-ku, Tokyo, 100 (JP)
(74) Representative: Brykman, Georges
(86) International application number: PCT/JP2006/301124
(87) International publication number: WO 2006/090549

(57) **Abstract**

In order to maintain the dust collection efficiency, it comprises: a filtration chamber 20 which has an carbon fiber outlet 10 from which carbon fibers are discharged and to which a gas including the carbon fibers is introduced; a flexible cylindrical filter cloth 22 one end of which is suspended in the filtration chamber and which collects the carbon fibers in the gas in order to clean up the gas; and a pathway 30 for cleaned-up gas which is connected to the filtration chamber 20 through the cylindrical filter cloth 22 and which allows the cleaned-up gas to pass through it.

Further, to the cylindrical filter cloth 22, a bottom plate 23 which is provided on the other end of the cylindrical filter cloth; ring supporting members 24 which are fixed to the cylindrical filter cloth and which are mutually separated with prescribed intervals in the axial direction of the cylindrical filter cloth; and a drive mechanism 40 which drives the bottom plate 23 along the axial direction of the cylindrical filter cloth 22; are provided in order that the cylindrical filter cloth 22 is freely expanded and contracted as bellows.

## Description

### Technical field

This invention relates to a gas filtration apparatus, and particularly, this invention relates to a new technology of removing carbon fibers collected by a filter cloth.

### Background art

Although the carbon fiber is well known fibrous carbon, recently, minute carbon fiber has attracted attentions.
Minute carbon fibers are classified into some types according to the diameter of the fiber, and they are called gaseous phase method carbon fiber, carbon nano fiber, carbon nanotube, etc., respectively.
Among them, the carbon nanotube which is the minutest one and has a diameter of not more than 100nm is expected to be used in a wide range of applications such as nano electronic industrial materials, composite materials, catalyst carriers for fuel cell or the like, and gas absorption material, etc., from the unique physical properties.

In the production processes of the above mentioned minute carbon fiber, hydrogen gas and inert gas such as nitrogen gas or argon gas, etc., may be used. When these gases are used with a recycled gas including hydrogen and hydrocarbon gas as by-products, and when the by-product gases are disposed as exhaust gases, a process of removing the minute carbon fibers accompanied with these gases is an indispensable process in order to improve the yield of minute carbon fiber to be obtained and to make the gases clean.

The gas filtration apparatus is known as apparatus which removes dust, etc., contained in the gas in order to improve cleanliness of the gas, and as the gas filtration apparatus one of various forms is adopted in accordance with the particle size of dust to be removed, the usage condition, etc. (for instance, see the following patent literatures 1 and 2).
The removal of ordinary dust, etc., is done by trapping the dust with a filter cloth set up in the apparatus, and then brushing the trapped dust off.

Further, as the method of brushing the dust trapped by the filter cloth off, for instance, shaking method, back wash method, pulse jet method are known.

The shaking method is a method wherein the filter cloth is vigorously shaken in order to brush the dust off, and is recognized as the method capable of the most effective brushing off.
However, the shaking method is generally based on the inside wall filtration. Therefore, when the attached dust got entangled in the filter with a high adhesiveness and the dust has an extremely small bulky specific gravity, it is difficult to brush the dust off from the inner wall of the filter cloth.

The back wash method is a method wherein the filter cloth is deformed by producing and applying a gas flow in the opposite direction to the flow on the filtration so as to remove and brush off the dust attached to the surface of the filter cloth. Thus, this method demands a filter cloth and the dust which are easily separated from each other, and many incidental equipments for performing the back wash, switching the filtration lines, and of the back wash fan, etc.

Incidentally, the pulse jet method is a method where the filter cloth is rapidly deformed so as to inflate the filter by applying an injected high pressure air, etc., and thus it is capable of performing a relatively powerful brushing off in a mode of peeling the attached dust off.
Generally, the brushing off is performed during the filtration by applying a pulse. However, when the dust interested has a small bulk specific gravity and thus the re-entrainment of the dust is concerned, the brushing off should be performed under the condition that the gas flow is stopped.
[Patent literature 1] JP HEI 6 (1994)-114222 A (Fig. 1, Fig.3)
[Patent literature 2] JP HEI9(1997)-248413 A (Fig. 1)

### Disclosure of the Invention

### Problem to be Solved by the Invention

However, with respect to the manufacturing apparatus of minute carbon fiber, since the created minute carbon fibers contain a VM (tar moiety)of 2-10%, and they are mutually entangled with each other with a very strong adhesion force, and they have an extremely light bulk specific gravity, it is difficult to brush the minute carbon fibers off from the filter cloth by any of methods known in this art.

Moreover, in the system where the filtrated gas is recycled, when a special gas is used, for example, that for the manufacturing apparatus for the minute carbon fiber, etc., has hydrogen gas as a main ingredient, the pulse jet according to the pulse jet method needs the hydrogen gas. However, to use the hydrogen gas may brings a difficulty for equipments, and the blushing off can not be attained sufficiently by the hydrogen gas because of the light weight of the hydrogen.

Further, in order to make a success of the condition of the minute carbon fiber generation part, it is necessary to suppress the pressure fluctuation extremely small. Thus, the methods known in the art were hardly applied to such a manufacturing apparatus for the minute carbon fiber because of the pressure fluctuation due to the switching of the filtration chamber, or the pulse jet.

This invention has been made in consideration of the above-mentioned problem, and provides a gas filtration apparatus that can remove certainly the minute carbon fibers which have adhered to a filter cloth with a high adhesion force, and that can suppress the pressure fluctuation caused by injection of gas or air during the flirtation as low as possible.

### Means for Solving the Problem

The gas filtration apparatus according to the present invention, is characterized in that it comprises a filtration chamber which has an open end for discharging carbon fibers and to which a gas including the carbon fibers is introduced; a flexible cylindrical filter cloth one end of which is suspended in the filtration chamber and which collects the carbon fibers in the gas in order to clean up the gas; ring supporting members which are fixed to the cylindrical filter cloth and which are mutually separated with prescribed intervals in the axial direction of the cylindrical filter cloth; a bottom plate which is provided on the other end of the cylindrical filter cloth; a drive mechanism which drives the bottom plate along the axial direction of the cylindrical filter cloth; and a pathway for cleaned-up gas which is connected to the filtration chamber through the cylindrical filter cloth and which allows the cleaned-up gas to pass through it.

Moreover, the above mentioned drive mechanism may comprise a driving shaft which is inserted in the cylindrical filter cloth in the axial direction of the cylindrical filter cloth and connected to the bottom plate, and a cylinder which makes the driving shaft drive along the axial direction of the cylindrical filter cloth.

Moreover, it is preferable that two or more of cylindrical filter cloths are provided in parallel, and the drive mechanism which is provided for the plural number of the cylindrical filter cloths makes the cylindrical filter cloths drive so as to cause variation in the axial direction of the cylindrical filter cloths between a base position of one cylindrical filter cloth and the corresponding base positions of the other cylindrical filter cloths, with the assumption that the base position of each individual cylindrical filter cloth is the approximate middle point in the axial direction of the respective filter cloth.

In addition, it is preferable that an induction duct, from which the gas including carbon fiber is introduced, is provided in the neighborhood of the connecting part to the cleaned-up gas pathway in the filtration chamber.

Moreover, in the gas filtration apparatus as mentioned above, it is preferable that the cylindrical filter cloth is composed of austenitic stainless steel fibers.

Incidentally, the above mentioned summary of the present invention does not enumerate all necessitated features of the present invention exhaustively, and thus any subcombination of the features may be also incorporated in the scope of the present invention.

### Effect of invention

According to the present invention, even if the dust collected by the filter cloth is a substance having an extremely high adhesion capability, such as the minute carbon fiber, it is possible to remove it off from the surface of the filter cloth with certainty.
In addition, the pressure fluctuation caused on the filtration can be reduced as much as possible.

In addition, when preparing the filter cloth with the austenitic stainless steel fibers, it is possible to obtain a gas filtration apparatus with excellent heatproof and corrosion resistance of the filtration cloth can be obtained

### Brief illustration of drawings

[Fig. 1] is an schematic diagram to illustrate the whole constitution of a gas filtration apparatus according to an embodiment of the present invention.
[Fig. 2A] is a diagram to illustrate the operation of the cylindrical filtration cloth of the gas filtration apparatus according to an embodiment of the present invention, and wherein the state that the cylindrical filtration cloth extends is shown.
[Fig. 2B] is a diagram to illustrate the operation of the cylindrical filtration cloth of the gas filtration apparatus according to an embodiment of the present invention, and wherein the state that the cylindrical filtration cloth shrinks is shown.

### Explanation of numerals

- 10: Carbon fiber outlet
- 20: Filtration chamber
- 21: Induction duct
- 22: Cylindrical filter cloth
- 23: Bottom plate
- 24: Supporting member
- 30: Cleaned-up gas pathway
- 31: Discharging duct
- 40: Drive mechanism
- 41: Driving shaft
- 42: Cylinder

### Best Mode for Carrying Out the Invention

Now, preferable embodiments for carrying out the present invention will be described with reference to the drawings.
In each embodiment described below, the case where the gas filtration apparatus according to the present invention is used in a manufacturing plant of minute carbon fiber is exemplified for the explanation of the present invention.
As gases which seek the filtration process, hydrogen gas, nitrogen gas, argon gas, and hydrocarbon gas which is a by-product during the carbon fiber production process, etc., are enumerated. This embodiment is constructed on the assumption that the gas interested is the hydrogen gas, and as the dust or the like which includes in such gas, the minute carbon fibers, which show an extremely high adhesion capability because they contain tar moiety and they are entangled mutually, are involved.
However, the following embodiments do not restrict the present invention claimed in annexed individual Claims, and all of the combinations of features described in the embodiments are not necessarily essential for the solving means of the present invention.

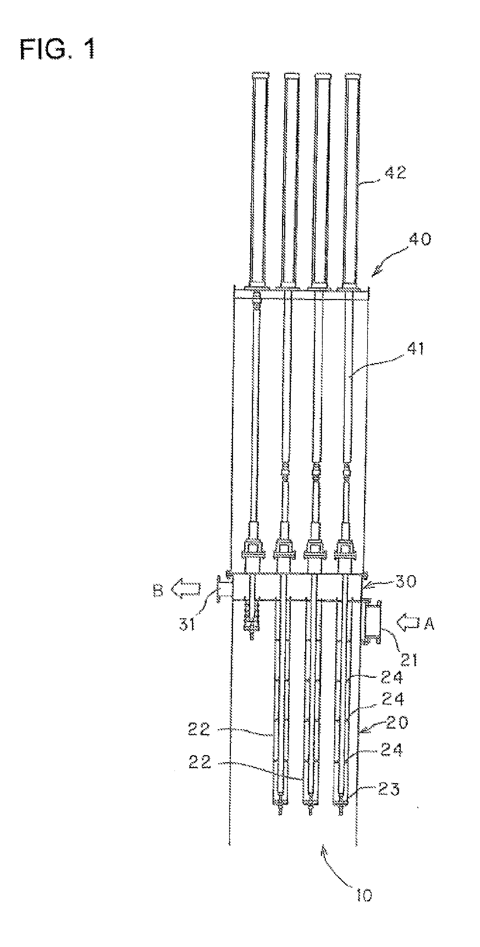

Fig. 1 is an schematic diagram to illustrate the whole constitution of a gas filtration apparatus according to an embodiment of the present invention.

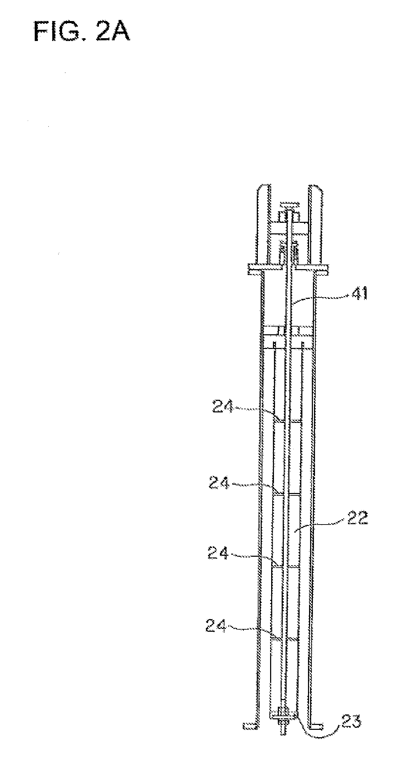

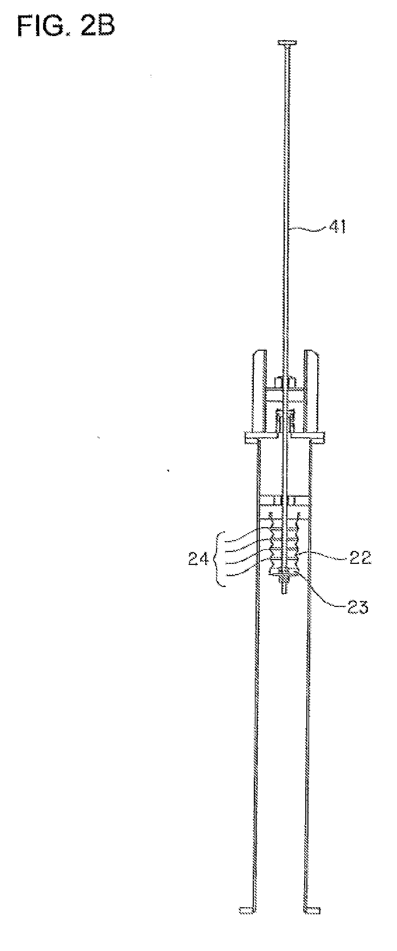

Fig. 2A and Fig. 2B are diagrams to illustrate the operation of the cylindrical filtration cloth of the gas filtration apparatus according to an embodiment of the present invention, and particularly, Fig. 2A shows the state that the cylindrical filtration cloth extends, and Fig. 2B shows the state that the cylindrical filtration cloth shrinks.

The gas filtration apparatus according to this embodiment has two rooms as the main components, i.e., a filtration chamber 20, and a cleaned-up gas pathway 30.
The filtration chamber 20 is a room that has a carbon fiber outlet 10 downward, and this carbon fiber outlet 10 would become capable of connecting to a carbon fiber collection apparatus or a carbon fiber collection container, which are not shown in this figure.
The carbon fibers which are removed from the filter cloth are discharged and recovered through this carbon fiber outlet 10.

The filtration chamber 20 is also the room where the gas including carbon fiber is introduced.
An induction duct 21 to introduce the gas including carbon fiber is provide in the neighborhood of the upper part of the filtration chamber 20.
Further, in the filtration chamber 20, two or more of flexible cylindrical filter cloths 22 are suspended, and these flexible cylindrical filter cloths 22 collect the carbon fibers in the gas which is introduced through the induction duct 21, in order to practice the gas clarification.
Although it is preferable to suspend two or more of the cylindrical filter cloths 22 in order to improve the recovery rate of the minute carbon fibers, the cylindrical filter cloth 22, even in a single number, can demonstrate sufficient collection effect. Therefore, the number of the cylindrical filter cloths 22 suspended in the filtration chamber is not limited to that exemplified in Fig. 1.

In cylindrical filter cloths 22 which are provided in the filtration chamber, on an individual basis, a bottom plate 23 which is provided on the lower end of the cylindrical filter cloth 22, and two or more of ring supporting members 24 which are fixed to the cylindrical filter cloth 22 and which are mutually separated with prescribed intervals in the axial direction of the cylindrical filter cloth 22 are provided. Further, to the plural number of the cylindrical filter cloths 22, a drive mechanism 40 which drives the individual bottom plates 23 along the axial direction of the individual cylindrical filter cloths 22.
Moreover, with respect to the drive mechanism 40 shown in Fig. 2A and Fig. 2B, the case where the drive mechanism 40 is composed of: driving shafts 41 each of which is individually inserted in the corresponding cylindrical filter cloth 22 in the axial direction of the cylindrical filter cloth 22 and connected to the corresponding bottom plate 23; and cylinders 42 each of which drives the corresponding driving shaft 41 on a free up-and-down motion; is disclosed.
By adopting such a constitution, the expansion and contraction operation of cylinder filter cloth 22 becomes possible.
Namely, when the driving shaft 41 is moved upwardly, the cylindrical filter cloth 22 shrinks while bending by means of the lifting-up motion of the bottom plate 23 (See, Fig. 2B).
On the other hand, when driving shaft 41 is moved downwardly, the cylindrical filter cloth 22 extends by means of the lifting-down motion of the bottom plate 23 in order that the filter cloth 22 becomes its original cylindrical shape (See, Fig. 2A).

Incidentally, the ring supporting members 24 which are fixed to the cylindrical filter cloth 22 and which are mutually separated with prescribed intervals in the axial direction of the cylindrical filter cloth 22 have the role of skeleton framework which supports the contour of the filter cloth 22 since they are fixed to the cylindrical filter cloth 22.
Therefore, when the cylindrical filter cloth 22 shrinks, the contour shape around the supporting members 24 is maintained, and the filter cloth between the supporting members 24 will shrink while bending.
In a word, the cylindrical filter cloth 22 becomes free expansion and contraction just like the bellows.
By the bellows-like expansion and contraction of the cylindrical filter cloth 22, the minute carbon fibers collected on the surface of the cylindrical filter cloth 22 are compressed between the supporting members 24 which are positioned continuously in the axial direction so as to enhance the bulk density of the minute carbon fibers, and thus the falling by own weight of the minute carbon fiber can be accelerated.

As such cylindrical filter cloth 22, polyester, polypropylene, polytetrafluoroetylene, nylon, and glass fiber are enumerated desirably, and austenitic stainless steel fibers are enumerated more desirably because of improving the heatproof and corrosion resistance of the filtration cloth.
As the austenitic stainless steel fiber, an austenitic stainless steel fiber which includes C : 0.15% or less, Si : 5.00% or less, Mn: 10. 0% or less, P: 0. 20% or less, S : 0.15% or less, Ni:3.50 - 28.00% and Cr:15.00 - 26.00%, by weight, and optionally includes one or more elements selected from the group consisting of Mo, Cu, N, Se, Nb and Ti, can be used for the material of the cylindrical filter cloth.
With respect to the above-mentioned ingredients, when C:0.08% or less, Si:1.00% or less, Mn:2.50% or less, P:0.045% or less, S:0.03% or less, Ni:7.00 - 15.00% and Cr:16.00 - 20.00%, by weight, so as to decrease the content of C, it is possible to obtain a filtration cloth having a more excellent flexibility.
Further, when including Mo within the range of 2.00-3.00% by weight, it is possible to obtain a filtration cloth showing a more excellent heatproof.
Incidentally, the remainder of the composition is Fe and inevitable impurities.
As the fibers of austenitic stainless steels that meet the above mentioned requirements, SUS304, SUS304L, SUS316, and SUS316L, etc., under the Japanese Industrial standards (JIS) are suitable.

The cleaned-up gas pathway 30 is a room connected to the upper part of filtration chamber 20 through the cylindrical filter cloth 22, and is a space where the cleaned-up gas passes after the carbon fibers are collected by the cylindrical filter cloth 22.
On this cleaned-up gas pathway 30, a discharging duct 31 is provided, and the gas derived from the discharging duct 31 will be recycled as a recovered hydrogen gas.

The constitution of the gas filtration apparatus according to this embodiment of the present invention was described above.
Next, the operation of the gas filtration apparatus according to this embodiment of the present invention will be described below.
First, the gas, which included carbon fibers, is introduced from the direction of the arrow denoted by symbol A into the filtration chamber 20 through the induction duct 21.
The gas introduced in filtration chamber 20 is allowed to remove the including carbon fiber while it passes through the cylindrical filter cloths 22 which are suspended in the filtration chamber 20, and then the gas being in the cleaned-up condition enters into the cleaned-up gas pathway 30.
Finally, the cleaned-up gas is derived to the direction of the arrow denoted by symbol B through the discharging duct 31, and recycled as a recovered hydrogen gas.

On the other hand, the carbon fibers, which adhere to the surface of the cylindrical filter cloths 22, keeps adhering and piling up on the cylindrical filter cloths 22, in proportion to the passage amount of the gas, so as to form a dust layer gradually.
When the dust layer piles up more than a prescribed amount, the dust layer will degrade the filtration capability of cylinder filter cloth 22 remarkably.
Then, by driving the cylinder 42, the driving shaft 41 is moved upwardly, and the cylindrical filter cloth 22 is shrunk (See, Fig. 2B).
As a result, the minute carbon fibers collected on the surface of the cylindrical filter cloth 22 are compressed between the supporting members 24 which are positioned continuously in the axial direction so as to enhance the bulk density of the minute carbon fibers, and the minute carbon fibers which adhered under the condition that the cylindrical filter cloth 22 was extended is deformed by the shrinking motion. When the cylindrical filter cloth 22 is extended again, the minute carbon fibers are obliged to keep its compressed form, and which is followed by the exfoliation of the minute carbon fibers from the filter cloth.

After the shrinkage operation is completed, the extension operation of the cylindrical filter cloth 22 is done by driving the cylinder 42.
By this extension operation, the cylindrical filter cloth 22 recovers its cylindrical shape, and the filtration capacity which is originally owned by the filter cloth will be recovered and maintained.

In addition, as an advantage point which is given by the gas filtration apparatus according to this embodiment of the present invention, the fact that the induction duct 21 for introducing the gas including carbon fiber is provided in the neighborhood of the upper part of the filtration chamber 20 is enumerated.
In the conventional gas filtration apparatuses, the induction duct 21 for the gas before cleaned-up was provided at lower side of the apparatus, or in the neighborhood of the carbon fiber outlet 11 (for instance, see, above mentioned Patent Literatures 1 and 2).
However, when the induction route for the gas before cleaned-up and the dust discharging route are arranged in the mutual neighborhood as it can be seen in the conventional constitution, a problem that efficient collection of dust can not be practiced arises, because the respective guide lines intersect each other.
Then, in the gas filtration apparatus according to this embodiment of the present invention, by locating the induction duct 21 which is the induction route for the gas before cleaned-up and the carbon fiber outlet 11 which is the dust discharging route at the positions where the respective guide lines does not intersect each other and they are alienated each other, the efficient collection of carbon fibers as compared with that of the conventional apparatus can be achieved.

Incidentally, with respect to the timing of the expansion and contraction operation in the plural number of the cylindrical filter cloths 22, it is preferable that the drive mechanism 40 which is provided for the plural number of the cylindrical filter cloths 22 makes the cylindrical filter cloths drive so as to cause variation in the axial direction of the cylindrical filter cloths 22 between a base position of one cylindrical filter cloth and the corresponding base positions of the other cylindrical filter cloths, with the assumption that the base position of each individual cylindrical filter cloth is the approximate middle point in the axial direction of the respective filter cloth.
By adopting such operation, even if the dust layers which are respectively piled up on the adjacent cylindrical filter cloths are interfered with each other, a large amount of carbon fiber can be dropped in a hopper chamber 10 at a time by scratching the dust at the interference region, and thus, the effective recovery of the carbon fibers can be attained.
Therefore, in order to recover the carbon fibers under a more preferable condition, it is desirable that the plural number of the cylindrical filter cloth 22 are expanded and contracted one by one with mutually different timings.

Incidentally, the temperature of the gas which is accompanied by the minute carbon fibers and which is introduced to the filtration chamber 20 may be 100 °C- 400°C, although it would be varied depending on the manufacturing condition of the minute carbon fibers.
When the austenitic stainless steel fibers are used as the material for the cylindrical filter cloth 22 concerned, the functions as the cylindrical filter cloth 22 can be maintained even if the introduced gas is at a high temperature, such as 400°C.
Moreover, it becomes also excellent in the corrosion resistance.

Although the preferable embodiments of the present invention were described above, the technical scope of the present invention is not limited within the range of the above mentioned embodiments.
To the above-mentioned embodiments, various changes or modifications can be added.
For instance, with respect to the drive mechanism 40, it is not limited to the illustrated one which uses the cylinders and driving shafts, and the driving mechanisms of every description can be adapted, for example, the one in which motors are used instead of the cylinders, the one in which wires are used instead of the driving shaft, etc. with a wire instead of the driving shaft.
It will be clearly understood from the description in the annexed claims that the embodiments adding such change or modification are also involved in the technical range of the present invention.

## Claims

1. Gas filtration apparatus comprises:
a filtration chamber which has an open end for discharging carbon fibers and to which a gas including the carbon fibers is introduced;
a flexible cylindrical filter cloth one end of which is suspended in the filtration chamber and which collects the carbon fibers in the gas in order to clean up the gas;
ring supporting members which are fixed to the cylindrical filter cloth and which are mutually separated with prescribed intervals in the axial direction of the cylindrical filter cloth;
a bottom plate which is provided on the other end of the cylindrical filter cloth;
a drive mechanism which drives the bottom plate along the axial direction of the cylindrical filter cloth; and
a pathway for cleaned-up gas which is connected to the filtration chamber through the cylindrical filter cloth and which allows the cleaned-up gas to pass through it.

2. The gas filtration apparatus according to Claim 1,
wherein the drive mechanism comprises:
a driving shaft which is inserted in the cylindrical filter cloth in the axial direction of the cylindrical filter cloth and connected to the bottom plate, and
a cylinder which makes the driving shaft drive along the axial direction of the cylindrical filter cloth.

3. The gas filtration apparatus according to Claim 1 or 2, wherein as the cylindrical filter cloth, two or more of the cylindrical filter cloths are provided in parallel, and the drive mechanism which is provided for the plural number of the cylindrical filter cloths makes the cylindrical filter cloths drive so as to cause variation in the axial direction of the cylindrical filter cloths between a base position of one cylindrical filter cloth and the corresponding base positions of the other cylindrical filter cloths, with the assumption that the base position of each individual cylindrical filter cloth is the approximate middle point in the axial direction of the respective filter cloth.

4. The gas filtration apparatus according to one of Claims 1-3, wherein an induction duct, from which the gas including carbon fiber is introduced, is provided in the neighborhood of the connecting part to the cleaned-up gas pathway in the filtration chamber.

5. The gas filtration apparatus according to one of Claims 1-4, wherein the cylindrical filter cloth comprises austenitic stainless steel fibers.
